# EUROPEAN PATENT APPLICATION

(11) **EP 1 533 258 A1**
(43) Date of publication of application: **25.05.2005**
(21) Application number: 04078174.2
(22) Date of filing: 19.11.2004
(51) Int. Cl.: B65G 65/48, B29C 49/18, G01F 11/10

(54) **Dispensing device for a fluid and mixing installation equipped therewith**

(30) Priority: 20.11.2003 NL 1024833
(71) Applicant: Ferlin Trading B.V., 7701 SJ Dedemsvaart (NL)
(72) Inventor: Drogt, Hendrik Harry, 7701 CJ Dedemsvaart (NL)
(74) Representative: Bartelds, Erik

(57) **Abstract**

The invention relates to a device (3) for dosed dispensing of a fluid, comprising a lying rotatable dispensing tube (9) which is connected to a drive (12) and which has an inflow opening (13) and an outflow opening (15) at a distance therefrom in longitudinal direction of the tube (9). By rotating the dispensing tube (9) the fluid is moved gradually from the inflow opening (13) to the outflow opening (15), whereby a uniform dosing is achieved. The inflow opening (13) can be formed in a side wall and the outflow opening (15) in an end wall of the dispensing tube (9).

The invention also relates to an installation (1) for admixing a fluid to a product flow (P), comprising a conduit (2) for the product flow (P) and a dispensing device (3) as described above connected thereto.

## Description

The invention relates to a device for dosed dispensing of a fluid. A fluid is here understood to mean any material which can flow, thus both a liquid, in particular a viscous liquid, and a granular or particulate solid material.

Such a dispensing device is generally known, and is for instance used to dispense an additive that must be added to a product flow. Here can be envisaged the addition of a dye to plastic granulate which must be extruded to form a coloured end product. It is of great importance in such applications that relatively small quantities can be dispensed with great accuracy.

A first type of prior art dispensing device, such as for instance described in WO 01/96006 or WO 02/053348, makes use of a screw conveyor which is accommodated in a housing and which is rotated by a drive connected thereto. Such dispensing devices have the drawback of being relatively expensive, while cleaning thereof, for instance when another dye will have to be dispensed, requires much effort. In addition, screw conveyors are not very suitable for dispensing small amounts of material, because at low rotation speeds the amount dispensed per unit of time varies with the position of the delivery end of the screw.

Another type of dispensing device makes use of a piston movable reciprocally in a cylinder, whereby the fluid is pressed toward an outflow opening. Such a dispensing device is also expensive and difficult to clean. A uniform dosage can furthermore not be achieved thus, since no material is dispensed during the return stroke of the piston.

The invention therefore has for its object to provide a dispensing device which can be manufactured simply and at low cost, is easy to clean and with which small quantities can also be dispensed with great precision. This is achieved according to the invention by a dispensing device which is provided with at least one lying rotatable dispensing tube which is connected to a drive and which has at least one inflow opening and at least one outflow opening at a distance therefrom in longitudinal direction of the tube. The fluid for dispensing will be moved gradually from the inflow opening(s) to the outflow opening(s) by the rotation of the dispensing tube, so that a uniform dosing can be achieved.

The at least one inflow opening is preferably formed in a side wall of the dispensing tube. When the inflow opening reaches its highest position through rotation of the dispensing tube, the fluid for dispensing can in this way be introduced from above into the tube, whereby gravity plays a part. A uniform feed can herein be ensured when the dispensing device is provided with a number of inflow openings arranged distributed in peripheral direction of the dispensing tube, so that an inflow opening is located on the top side of the dispensing tube a number of times per rotation.

For feed of the fluid to the inflow opening(s), the dispensing device is preferably provided with a feed hopper debouching in the vicinity of the at least one inflow opening. An even more uniform feed is obtained if the feed hopper debouches in a chamber in which at least the part of the dispensing tube having the at least one inflow opening is rotatably mounted. This end of the dispensing tube will thus always rotate in a supply of fluid for dispensing.

The at least one outflow opening is preferably formed in an end wall of the dispensing tube. In this manner the length of the dispensing tube is utilized optimally for the purpose of forming a uniform fluid flow. When the dispensing device is then provided with a single outflow opening which covers substantially the whole cross-section of the dispensing tube, the fluid can be dispensed in precisely dosed manner under all circumstances, irrespective of the position of the dispensing tube.

In order to form a uniform fluid flow through the dispensing tube, it is recommended that this latter has a substantially rotation-symmetrical cross-sectional form, wherein the best results are obtained when the dispensing tube has a circular cross-section.

The dispensing tube further preferably has a substantially smooth inner wall, whereby the flow of the fluid is not disrupted.

In order enable adjustment of the quantity to be dispensed, the drive is preferably controllable. Because the dispensing tube, in contrast to a dispensing screw, is not direction-dependent, the device can operate in two directions.

A compact and structurally simple dispensing device is obtained when the drive is connected to an end part of the dispensing tube remote from the at least one outflow opening.

The invention further relates to an installation for admixing a fluid to a product flow. Such a mixing installation is likewise known, and generally comprises at least one conduit for the product flow and a dispensing device connected thereto. According to the invention such a mixing installation is characterized by a device for dosed dispensing of the fluid of the above described type.

A compact construction of the mixing installation is achieved when the at least one outflow opening of the dispensing device debouches directly into the at least one conduit. In order here to prevent direct contact between the dispensing tube and the product flow, the mixing installation is preferably provided with a delivery chamber which extends in the at least one conduit substantially transversely of the flow direction of the product and in which the dispensing tube of the dispensing device is freely rotatable. In order to minimize the resistance which the product flow encounters from the delivery chamber, it is recommended that this latter is tubular, extends over the whole width of the at least one conduit and, as seen in the flow direction of the product, has at least one dispensing opening which is directed downstream.

The invention will now be elucidated on the basis of a number of exemplary embodiments, wherein reference is made to the accompanying drawing, in which corresponding components are designated with the same reference numerals, and in which:
Fig. 1 shows a longitudinal section through a mixing installation with a dispensing device according to a first embodiment of the invention,
Fig. 2 shows a top view of the dispensing device of fig. 1,
Fig. 3 and 4 are detail views of the circled part of fig. 2, wherein different possible forms and dimensions of the inflow opening(s) are shown,
Fig. 5, 6 and 7 show schematic perspective views of alternative configurations of the inflow openings, and
Fig. 8, 9 and 10 show schematic perspective views of alternative configurations of the outflow openings.

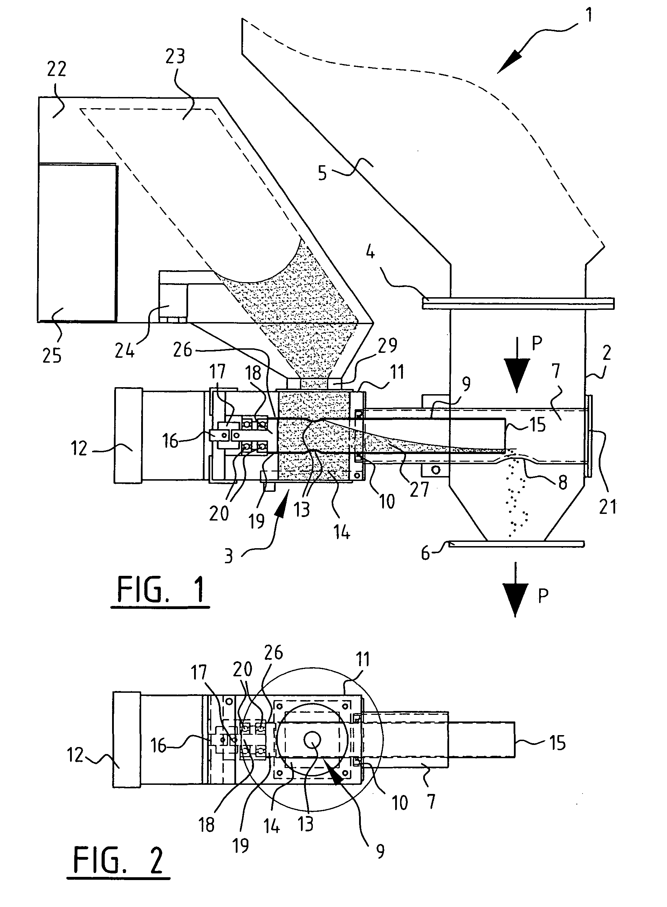

An installation 1 (fig. 1) for admixing a fluid F to a product flow (indicated schematically here with arrows P) comprises a conduit 2 (which is vertical in the shown embodiment) for the product flow and a device 3 connected thereto for dosed dispensing of fluid F.

Conduit 2 is fastened at the top by a flange coupling 4 to a hopper 5 in which there is arranged a supply of the product, for instance plastic granulate forming a raw material for an extrusion process. Conduit 2 is provided on the underside with a second flange 6 for fixing to an extrusion apparatus (not shown). Further formed in conduit 2 is a tubular delivery chamber 7 which extends horizontally, and therefore transversely of the flow direction of the product, over the whole width of conduit 2, and which has on the underside a dispensing opening 8. In the shown embodiment an end of delivery chamber 7 is fixed by a flange connection 21 to the side wall of conduit 2, while an opposite end protrudes through the side wall of the conduit and extends as far as dispensing device 3, which debouches in delivery chamber 7. It is otherwise also possible to envisage a dispensing device 3 being arranged on either side of conduit 2 for the purpose of dispensing two different fluids. In that case both ends of delivery chamber 7 can protrude through the side wall of conduit 2.

Dispensing device 3 comprises a horizontal dispensing tube 9 which is received rotatably in a through-bore 26 in a solid aluminium housing 11. Dispensing tube 9 is connected to a rotating drive 12 mounted on housing 11. Dispensing tube 9 is provided with one or more, and in the shown embodiment two, inflow openings 13 distributed in peripheral direction. These inflow openings 13 are formed in a part of the side wall of tube 9 situated in a chamber 14 of housing 11 that is open at the top. This chamber 14 is formed by a vertical bore in the solid housing 11. At the opposite end, which protrudes through a seal 10 into delivery chamber 7, dispensing tube 9 is provided with an outflow opening 15 which is formed here in that this end of tube 9 is wholly open.

The drive 12 is provided with an output shaft 16 fixed by a coupling 17 to a shaft part 18, which is fixed in turn to the end 19 of dispensing tube 9 located opposite outflow opening 15. This shaft part 18 is supported rotatably in the bore 26 in housing 11 by means of a bearing 20 which, in respect of stability, takes a dual form. Bearings 20 are placed outside chamber 14.

Mounted on housing 11 is a feed device 22 for fluid F, consisting of a feed hopper 23, a weighing device 24 connected thereto and a control 25. Hopper 23 debouches via a connecting piece 29 into the open top side of chamber 14.

The operation of dispensing device 3 is now as follows. The fluid F for dispensing flows out of hopper 23 into chamber 14, which always remains almost fully filled. Dispensing tube 9 is revolved relatively slowly in the fluid-filled chamber by drive 12. Dispensing tube 9 herein as it were "scoops" a quantity of fluid F out of chamber 14 each time the inflow openings 13 move to the top. Under the influence of the rotating movement this fluid F is spread in longitudinal direction of dispensing tube 9, wherein a slope or incline 27 is as it were formed. When fluid F reaches the outflow end of dispensing tube 9, it lies uniformly distributed in a relatively thin layer along the inner wall of tube 9. A small amount of fluid F thus finally flows substantially continuously into delivery chamber 7 through the outflow opening 15 at the end of dispensing tube 9.

The form of dispensing tube 9, and particularly the inflow and outflow openings 13, 15, can of course be varied in many ways depending on the properties of the fluid for dispensing and the desired dosage.

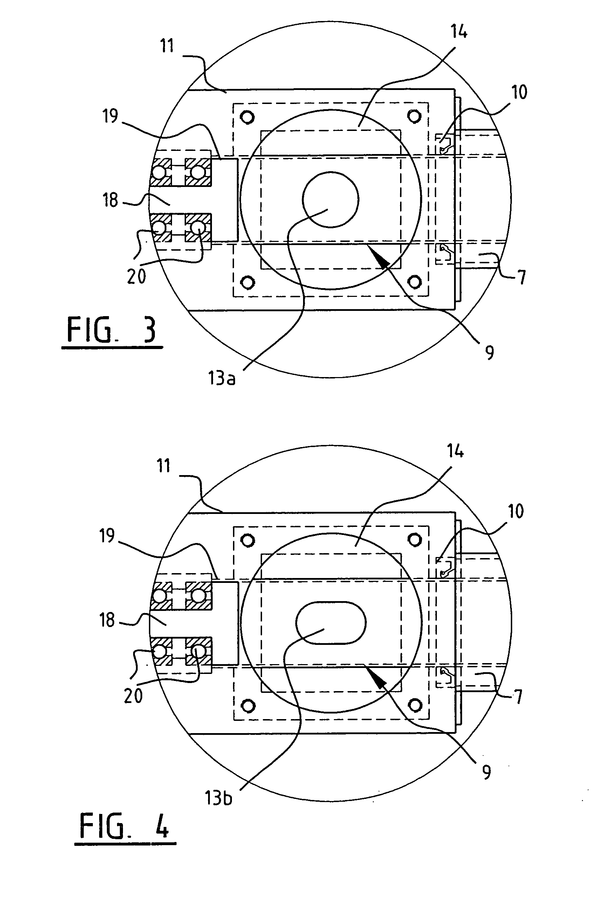

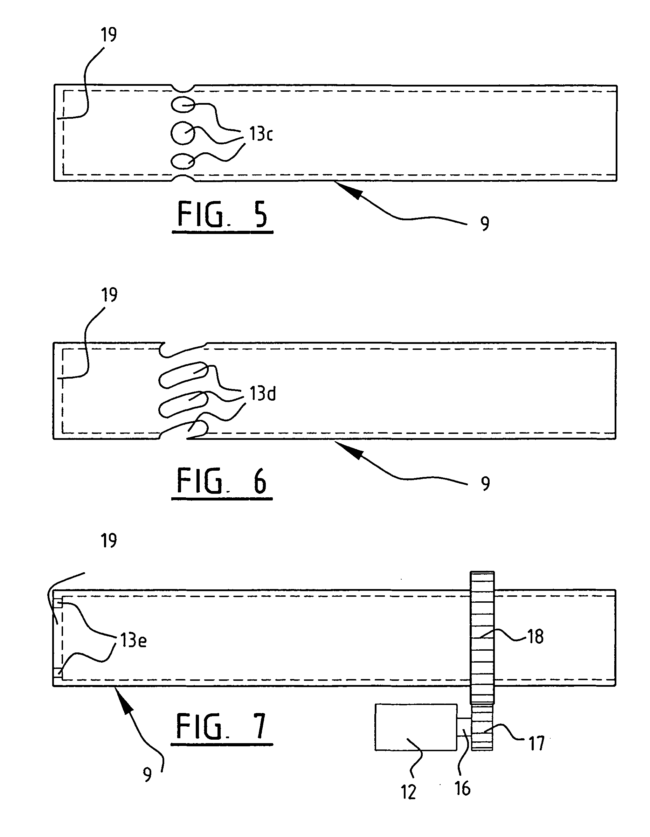

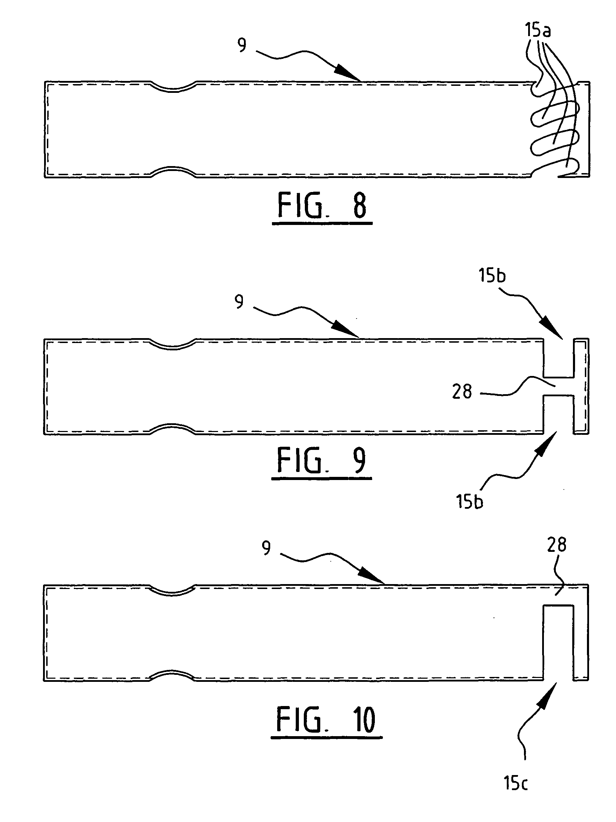

The inflow openings 13a could thus be given a larger form (fig. 3), or it is possible to opt for inflow openings 13b with an elongate form in longitudinal direction of dispensing tube 9 (fig. 4). A large number of relatively small inflow openings 13c could also be provided, whereby a more uniform feed is created (fig. 5). Such a uniform feed would also be ensured if use were made of spiral-shaped inflow openings 13d which overlap each other in peripheral direction (fig. 6). It is further possible to envisage the inflow opening(s) 13e not being formed in the side wall but in the end wall of dispensing tube 9 (fig. 7), which must of course then lie in chamber 14. In that case the output shaft 16 of drive 12 could engage via for instance a toothed wheel 17 on a gear rim 18 around the side wall of tube 9.

Outflow opening(s) 15 could also be formed in the side wall of dispensing tube 9. A choice could be made here for an overlapping configuration of a number of spiral-shaped outflow openings 15a (fig. 8), or for two slot-like outflow openings 15b which together cover practically the whole periphery of dispensing tube 9 and are only interrupted by relatively narrow connecting strips 28 (fig. 9). A single slot-like outflow opening 15c covering practically the whole periphery of tube 9 can also be envisaged (fig. 10). In that case it is possible to opt for reciprocal movement of drive 12 so that the outflow is never interrupted by the remaining strip of side wall 28.

Although the invention is elucidated above with reference to a number of exemplary embodiments, it is not limited thereto. The scope of the invention is defined solely by the following claims.

## Claims

1. Device for dosed dispensing of a fluid, comprising at least one lying rotatable dispensing tube which is connected to a drive and which has at least one inflow opening and at least one outflow opening at a distance therefrom in longitudinal direction of the tube.

2. Dispensing device as claimed in claim 1, **characterized in that** the at least one inflow opening is formed in a side wall of the dispensing tube.

3. Dispensing device as claimed in claim 2, **characterized by** a number of inflow openings arranged distributed in peripheral direction of the dispensing tube.

4. Dispensing device as claimed in any of the foregoing claims, **characterized by** a feed hopper debouching in the vicinity of the at least one inflow opening.

5. Dispensing device as claimed in claim 4, **characterized in that** the feed hopper debouches in a chamber in which at least the part of the dispensing tube having the at least one inflow opening is rotatably mounted.

6. Dispensing device as claimed in any of the foregoing claims, **characterized in that** the at least one outflow opening is formed in an end wall of the dispensing tube.

7. Dispensing device as claimed in claim 6, **characterized by** a single outflow opening which covers substantially the whole cross-section of the dispensing tube.

8. Dispensing device as claimed in any of the foregoing claims, **characterized in that** the dispensing tube has a substantially rotation-symmetrical cross-sectional form.

9. Dispensing device as claimed in claim 8, **characterized in that** the dispensing tube has a circular cross-section.

10. Dispensing device as claimed in any of the foregoing claims, **characterized in that** the dispensing tube has a substantially smooth inner wall.

11. Dispensing device as claimed in any of the foregoing claims, **characterized in that** the drive is controllable.

12. Dispensing device as claimed in any of the foregoing claims, **characterized in that** the drive can operate in two directions.

13. Dispensing device as claimed in any of the foregoing claims, **characterized in that** the drive is connected to an end part of the dispensing tube remote from the at least one outflow opening.

14. Installation for admixing a fluid to a product flow, comprising at least one conduit for the product flow and a device connected thereto for dosed dispensing of the fluid as claimed in any of the foregoing claims.

15. Mixing installation as claimed in claim 14, **characterized in that** the at least one outflow opening of the dispensing device debouches into the at least one conduit.

16. Mixing installation as claimed in claim 15, **characterized by** a delivery chamber which extends in the at least one conduit substantially transversely of the flow direction of the product and in which the dispensing tube of the dispensing device is freely rotatable.

17. Mixing installation as claimed in claim 16, **characterized in that** the delivery chamber is tubular, extends over the whole width of the at least one conduit and, as seen in the flow direction of the product, has at least one dispensing opening which is directed downstream.
